# EUROPEAN PATENT SPECIFICATION

(11) **EP 1 100 227 B1**
(45) Date of publication and mention of the grant of the patent: **02.01.2004**
(21) Application number: 99440311.1
(22) Date of filing: 12.11.1999
(51) Int. Cl.: H04L 12/26

(54) **Telecommunication system, terminal, network, monitor and method**
Telekommunikationssystem, -terminal, -netzwerk, -monitor und -verfahren
Système, terminal, réseau, moniteur et méthode de télécommunication

(43) Date of publication of application: 16.05.2001
(73) Proprietor: ALCATEL, 75008 Paris (FR)
(72) Inventor: Lecomte, Daniel, 75116 Paris (FR); Szychowiak, Piotr, 67400 Illkirch (FR)
(74) Representative: van Bommel, Jan Peter

(56) References cited:
- US-A- 5 475 625
- US-A- 5 572 533

## Description

The invention relates to a telecommunication system comprising a terminal which comprises a transmitter for in response to a trigger signal transmitting information to a monitor via a network and comprising said network which is coupled to said terminal via a communication coupling and comprising a generator for generating said trigger signal and comprising said monitor which comprises a receiver for receiving said information.

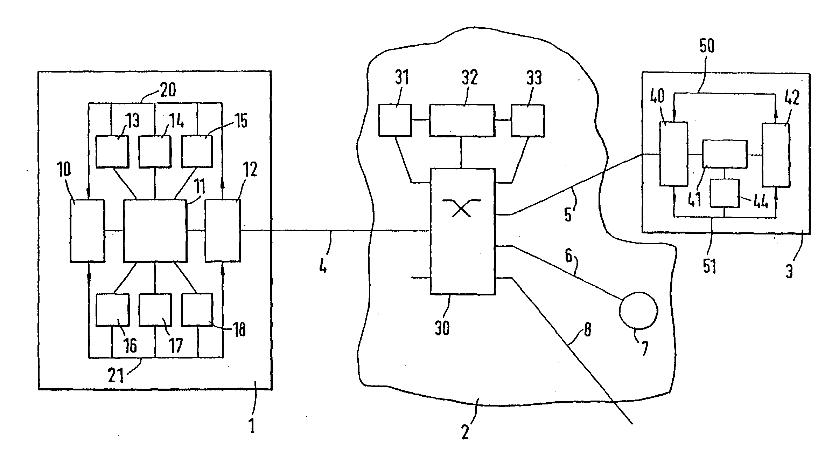

Such a telecommunication system is known from US 5,475,625, which discloses in its figure 1 a telecommunication system comprising a terminal (computer 3) and comprising a network (local network 2) which is coupled to said terminal via a communication coupling (bus 4) and comprising a monitor (monitoring computer 1), and which discloses in its column 2 lines 31-54 that said monitor comprises a generator for generating a trigger signal (column 2 line 31: the monitoring computer inquires .... etc.) and that said terminal comprises a transmitter for in response to said trigger signal transmitting information to said monitor via said network (column 2 lines 41-45: .... and outputs them ....etc.) and that said monitor comprises a receiver for receiving said information (column 2 lines 43-48: .... comparing the attribute arriving via the network .... etc.).

The known telecommunication system is disadvantageous, inter alia, in that it is designed to notice manipulation on computers and to isolate those computers which have been manipulated, without taking into account possible other manipulations.

It is an object of the invention, inter alia, to provide a telecommunication system as defined in the preamble which monitors communication couplings between terminals and networks efficiently.

The telecommunication system according to the invention is characterised in that said generator either forms part of said terminal or forms part of said network, with said monitor monitoring said communication coupling by checking said information, with said communication coupling corresponding with a so-called always-on IP-connection, and with said information being a first information signal comprising a first code, and with said network comprising a switch for switching said first information signal comprising said first code to a first destination corresponding with said monitor and for switching a second information signal comprising a second code and originating via said communication coupling from said terminal to a second destination, with said first code being different from said second code and with said first destination corresponding with said monitor being different from said second destination.

By letting said generator either form part of said terminal or form part of said network, the trigger signal is generated closer to the terminal and therefore flows a shorter, more efficient route compared to the prior art situation where the trigger signal originates from the monitor. By using a communication coupling corresponding with a so-called always-on IP-connection, the communication coupling itself is very efficient, without the setting up and afterwards disconnecting of said communication coupling just for said monitoring. And by introducing the switch for switching the first information signal comprising said first code to a first destination corresponding with said monitor and for switching the second information signal comprising a second code and originating via said communication coupling from said terminal to a second destination, with said first code being different from said second code and with said first destination corresponding with said monitor being different from said second destination, the terminal, the communication coupling as well as the network are used most efficiently for at least two purposes being the monitoring (first information signal) and being the usual exchange of data for sending instruction information (second information signal) for example to receive WEB-site information defined by said instruction information.

The invention is based upon the insight, inter alia, that an always-on IP-connection in combination with switching technology can be used efficiently for different purposes.

The invention solves the problem, inter alia, of providing a telecommunication system which monitors communication couplings between terminals and networks efficiently.

A first embodiment of the telecommunication system according to the invention is characterised in that said generator is a network generator, with said terminal comprising a receiver for receiving said trigger signal.

By providing said network with said network generator, said trigger signal like for example a periodical signal is generated inside said network by said network generator like for example a clock signal generator, and then transmitted via said communication coupling to said terminal. In this case, said network has a kind of a master function, and said terminal and said monitor have a kind of a slave function.

A second embodiment of the telecommunication system according to the invention is characterised in that said trigger signal is also sent via said switch and said coupling to said receiver in said monitor.

By sending said trigger signal also via said switch and said coupling to said receiver in said monitor, this monitor can check a time-interval between an arrival of this trigger signal and an arrival of said first information signal.

A third embodiment of the telecommunication system according to the invention is characterised in that said generator is a terminal generator.

By providing said terminal with said terminal generator, said trigger signal like for example a periodical signal is generated inside said terminal by said terminal generator like for example a clock signal generator. In this case, said terminal has a kind of a master function, and said monitor has a kind of a slave function.

A fourth embodiment of the telecommunication system according to the invention is characterised in that said first information comprising said first code further comprises origin information.

Said origin information will define an origin like said terminal and/or other equipment coupled to said communication coupling.

A fifth embodiment of the telecommunication system according to the invention is characterised in that said first information comprising said first code further comprises a code defining a type of alarm.

Said code defining a type of alarm will define an alarm like the breaking of a window or the movement in a room.

A sixth embodiment of the telecommunication system according to the invention is characterised in that said communication coupling corresponding with a so-called always-on IP-connection is based upon Digital Subscriber Line technology or upon Integrated Service Digital Network technology or upon General Packet Radio Service technology, with said terminal comprising a transceiver which comprises a Digital Subscriber Line modem or an Integrated Service Digital Network modem or a General Packet Radio Service radio part.

The invention further relates to a terminal for use in a telecommunication system comprising said terminal which comprises a transmitter for in response to a trigger signal transmitting information to a monitor via a network and comprising said network which is coupled to said terminal via a communication coupling and comprising a generator for generating said trigger signal and comprising said monitor which comprises a receiver for receiving said information.

The terminal according to the invention is characterised in that said generator is a terminal generator forming part of said terminal, which terminal comprises a transceiver coupled to said communication coupling corresponding with a so-called always-on IP-connection, and with said information being a first information signal comprising a first code to be switched to a first destination corresponding with said monitor for monitoring said communication coupling by checking said information, and with a second information signal comprising a second code and originating from said terminal to be switched to a second destination, with said first code being different from said second code and with said first destination corresponding with said monitor being different from said second destination.

Embodiments of such a terminal could define said terminal being based upon Digital Subscriber Line technology and/or upon Integrated Service Digital Network technology and/or upon General Packet Radio Service technology, and could define said terminal being in the form of a so-called residential gateway having said terminal features, and could define said terminal being in the form of a so-called network-termination (NT, like for example an ADSL NT or ANT) and/or could define a network termination having said terminal features.

The invention yet further relates to a network for use in a telecommunication system comprising a terminal which comprises a transmitter for in response to a trigger signal transmitting information to a monitor via said network and comprising said network which is coupled to said terminal via a communication coupling and comprising a generator for generating said trigger signal and comprising said monitor which comprises a receiver for receiving said information.

The network according to the invention is characterised in that said generator is a network generator forming part of said network, with said network comprising a switch which is coupled to said communication coupling corresponding with a so-called always-on IP-connection, and with said information being a first information signal comprising a first code, and with said switch switching said first information signal comprising said first code to a first destination corresponding with said monitor for monitoring said communication coupling by checking said information and switching a second information signal comprising a second code and originating via said communication coupling from said terminal to a second destination, with said first code being different from said second code and with said first destination corresponding with said monitor being different from said second destination.

Embodiments of such a network could define said network being based upon Digital Subscriber Line technology and/or upon Integrated Service Digital Network technology and/or upon General Packet Radio Service technology.

The invention also relates to a monitor for use in a telecommunication system comprising a terminal which comprises a transmitter for in response to a trigger signal transmitting information to said monitor via a network and comprising said network which is coupled to said terminal via a communication coupling and comprising a generator for generating said trigger signal and comprising said monitor which comprises a receiver for receiving said information.

The monitor according to the invention is characterised in that said monitor monitors said communication coupling by checking said information, with said communication coupling corresponding with a so-called always-on IP-connection, and with said information being a first information signal comprising a first code to be switched to a first destination corresponding with said monitor, and with said receiver further receiving said trigger signal, and with said monitor further comprising a processor for checking a time-interval between an arrival of said first information signal and an arrival of said trigger signal, with said time-interval being smaller than a predefined threshold resulting in an ok-message and with said time-interval being larger than said predefined threshold resulting in an alarm-message.

The invention yet also relates to a method for use in a telecommunication system comprising a terminal which comprises a transmitter for in response to a trigger signal transmitting information to a monitor via a network and comprising said network which is coupled to said terminal via a communication coupling and comprising a generator for generating said trigger signal and comprising said monitor which comprises a receiver for receiving said information.

The method according to the invention is characterised in that said method comprises the steps of generating said trigger signal via said generator either in said terminal or in said network and of monitoring said communication coupling by checking said information via said monitor and of switching said information being a first information signal comprising a first code via a switch and arriving via said communication coupling corresponding with a so-called always-on IP-connection to a first destination corresponding with said monitor and of switching a second information signal comprising a second code and originating via said communication coupling from said terminal to a second destination, with said first code being different from said second code and with said first destination corresponding with said monitor being different from said second destination.

Embodiments of such a method could define said communication coupling being based upon Digital Subscriber Line technology and/or upon Integrated Service Digital Network technology and/or upon General Packet Radio Service technology.

The document US 5,951,637 discloses a bandwidth reservation system comprising an always-on connection based upon ISDN technology. All references, including this US patent, and including all further references cited with respect to the beforementioned references, are considered to be hereby incorporated.

The invention will be further explained at the hand of an embodiment described with respect to a drawing, whereby figure 1 discloses a telecommunication system according to the invention comprising a terminal 1 according to the invention and a network 2 according to the invention and a monitor 3 according to the invention.

The terminal 1 according to the invention comprises a man-machine-interface 10 (comprising for example a keyboard-part and a display-part) coupled to a first bus 20 (for example the display-part) and to a second bus 21 (for example the keyboard-part) and coupled to a processor 11 via a control connection. Processor 11 is coupled to a transceiver 12 via a control connection, which transceiver 12 is coupled to network 2 via a communication coupling 4 and is coupled to said first bus 20 and to said second bus 21. Processor 11 is further coupled to a receiver 13 via a control connection and to a first unit 14 via a control connection and to a first memory 15 via a control connection. Said receiver 13 and said first unit 14 and said first memory 15 are each coupled to first bus 20. Processor 11 is further coupled to a transmitter 16 via a control connection and to a second unit 17 via a control connection and to a second memory 18 via a control connection. Said transmitter 16 and said second unit 17 and said second memory 18 are each coupled to second bus 21.

The network 2 according to the invention comprises a switch 30 coupled to said communication coupling 4 and to said monitor 3 via a coupling 5 and to a server 7 via a coupling 6 and to an other network via a coupling 8. Switch 30 is further coupled to a processor 32, and to a memory 31 coupled to processor 33 via a control connection, and to a network generator 33 coupled to processor 33 via a control connection.

The monitor 3 according to the invention comprises a transceiver 40 coupled to said coupling 5 and coupled to a processor 41 via a control connection and coupled to a first bus 50 and to a second bus 51. A man-machine-interface 42 (comprising for example a keyboard-part and a display-part) coupled to said first bus 50 (for example the keyboard-part) and to said second bus 51 (for example the display-part) is further coupled to processor 41 via a control connection.
Processor 41 is coupled to a unit 44 via a control connection, which unit 44 is coupled to said second bus 51.

The telecommunication system according to the invention as shown in figure 1 functions as follows.

According to a first embodiment, terminal 1 has some kind of a master function, and is used for monitoring communication coupling 4 as well as for getting access to the Internet, for example. First unit 14 is a terminal generator, having itself a clock signal generator function or receiving a clock signal from processor 11, and generates (for example periodically) in response to said clock signal a trigger signal which via first bus 20 is sent to receiver 13. Receiver 13 informs processor 11 that said trigger signal has arrived, in response to which processor 11 controls transmitter 16 in such a way that transmitter 16 transmits first information in the form of a first information signal comprising a first code via second bus 21 to transceiver 12, which sends said first information including said first code via said communication coupling 4 to network 2. At the same time, a user sitting behind man-machine-interface 10 is generating second (instruction) information in the form of a second information signal having a second code, which via second bus 21 and transceiver 12 is also transmitted via communication coupling 4 to network 2.

Said communication coupling 4 is in the form of an always-on IP-connection which, in case of an analog coupling, could be based upon Digital Subscriber Line technology (xDSL with a baseband channel and one or more higher frequency channels, whereby for example said first and second information signals either will be multiplexed in time and situated in one frequency channel or will be situated in different frequency channels), and could be, in case of a digital coupling, based upon ISDN technology (in particular the use of a D-channel, whereby for example said first and second information signals will be multiplexed in time ) and could be, in case of a radio coupling, based upon GPRS technology (General Packet Radio Service).

In network 2, in response to a detection of said first code, switch 30 makes a connection between communication coupling 4 and coupling 5. As a result, monitor 3 receives said first information signal (with or without said first code) via transceiver 40. Said first information signal flows via second bus 51 to unit 44 being a receiver for receiving this first information signal, which unit 44 informs processor 41 of the arrival of this first information signal. Processor 41 then checks a time-interval between this arrival of this first information signal and an arrival of a previous first information signal (in case of said trigger signal being generated periodically, said first information signal will also be sent periodically). In case of said time-interval being smaller than a predefined threshold, processor 41 sends an ok-message to man-machine-interface 42 for displaying such an ok-message in relation to terminal 1. In case of said time-interval being larger than said predefined threshold, processor 41 sends an alarm-message to man-machine-interface 42 for displaying such an alarm-message in relation to terminal 1. In response to said alarm-message, either a person working at said monitor 3 (for example by using man-machine-interface 42, especially the keyboard-part) or processor 41 automatically makes a call via coupling 5 and switch 30 and coupling 8 to for example a police station for reporting a problem with terminal 1.

In network 2, in response to a detection of said second code, switch 30 makes a connection between communication coupling 4 and for example coupling 6. As a result, server 7 receives said second information signal (with or without said second code) and in response sends back for example WEB-site information as defined by said second information signal, which WEB-site information flows via coupling 8 and switch 30 and communication coupling 4 to terminal 1, where it will be displayed via man-machine-interface 10, etc.

Said first and second codes will generally define real destinations like said monitor 3 and said server 7, but could also define virtual destinations which in switch 30 and/or network 2 are translated into real destinations. Further, said codes could further comprise origin information defining an origin like said terminal 1 and/or other equipment coupled to communication coupling 4. Said second information signal is not restricted to instruction information, but could also be related to email messages to be exchanged, to chatting information etc. The term "always-on IP-connection" should not be limited to for example the IP-protocol, but should be considered to be each possible "always-on" connection, whereby said first information signal according to a more complex alternative may comprise video information for surveillance purposes and may comprise other information for example related to an object under surveillance, with said object comprising terminal 1. Of course, monitor 3 generally will be able to monitor more than one terminal, in which case said first information and/or said first code must comprise some origin information.

According to a second embodiment, network 2 has some kind of a master function. Network generator 33 has itself a clock signal generator function or receives a clock signal from processor 32, and generates (for example periodically) in response to said clock signal a trigger signal which via switch 30 and communication coupling 4 is sent to terminal 1. Thereto, said trigger signal will comprise a code defining (a destination of) terminal 1. In terminal 1 said trigger signal flows via transceiver 12 and first bus 20 to receiver 13. Receiver 13 informs processor 11 that said trigger signal has arrived, in response to which processor 11 controls transmitter 16 in such a way that transmitter 16 transmits first information in the form of a first information signal comprising a first code via second bus 21 to transceiver 12, which sends said first information including said first code via said communication coupling 4 to network 2. At the same time, a user sitting behind man-machine-interface 10 is generating second (instruction) information in the form of a second information signal having a second code, which via second bus 21 and transceiver 12 is also transmitted via communication coupling 4 to network 2.

In network 2, in response to a detection of said first code, switch 30 makes a connection between communication coupling 4 and coupling 5. As a result, monitor 3 receives said first information signal (with or without said first code) via transceiver 40. Said first information signal flows via second bus 51 to unit 44 being a receiver for receiving this first information signal, which unit 44 informs processor 41 of the arrival of this first information signal. Processor 41 then checks a time-interval between this arrival of this first information signal and an arrival of a previous first information signal (in case of said trigger signal being generated periodically, said first information signal will also be sent periodically). In case of said time-interval being smaller than a predefined threshold, processor 41 sends an ok-message to man-machine-interface 42 for displaying such an ok-message in relation to terminal 1. In case of said time-interval being larger than said predefined threshold, processor 41 sends an alarm-message to man-machine-interface 42 for displaying such an alarm-message in relation to terminal 1. In response to said alarm-message, either a person working at said monitor 3 (for example by using man-machine-interface 42, especially the keyboard-part) or processor 41 automatically makes a call via coupling 5 and switch 30 and coupling 8 to for example a police station for reporting a problem with terminal 1.

According to an alternative to said second embodiment, said trigger signal is not just sent via switch 30 and communication coupling 4 to terminal 1, but is also sent via switch 30 and coupling 5 to monitor 3. As a result, monitor 3 receives said trigger signal (with said code defining a destination of terminal 1) via transceiver 40. Said trigger signal flows via second bus 51 to unit 44 being a receiver for also receiving this trigger signal(in addition to receiving said first information signal), which unit 44 informs processor 41 of the arrival of this trigger signal, which processor 41 stores data defining this in its memory. Then, after the arrival of said first information signal originating from terminal 1, processor 41 will check a time-interval between this arrival of this first information signal and said arrival of said trigger signal, with said time-interval being smaller than a predefined threshold resulting in said ok-message and with said time-interval being larger than said predefined threshold resulting in said alarm-message, etc.

All embodiments are just embodiments and do not exclude other embodiments not shown and/or described. For example, for a person skilled in the art and/or in view of common general knowledge, each transceiver 12,40 may comprise an xDSL modem or an ISDN modem or a GPRS radio part including an antennae. Each unit 10-18, 30-33, 40-51 shown in figure 1 may comprise a software part and a hardware part, whereby generally functions of each software part could be shifted into each hardware part and vice versa. In terminal 1 and monitor 3, several units could be combined into one new unit, and each unit could be divided into several new units.

In view of this, said terminal 1 could also comprise a detector (for example second unit 17) for detecting an alarm (like the breaking of a window or a movement in a room) and for in response sending an alarm signal (for example comprising said first code and a code defining a destination of terminal 1 and a further code defining the type of alarm) via said communication coupling 4 and switch 30 to monitor 5. Said monitor 5 could be located in and form part of network 2, and could be a large surveillance room. Monitor 5 could even be a (mobile) unit (mobile hereby meaning to be carried and to be coupled to switch 30 via an analog line or a digital line or a DECT radio-coupling or a GSM radio-coupling etc., whereby for this part of the coupling the disadvantage of setting up and afterwards disconnecting of course again appears), in which case the owner of an object in which terminal 1 is located could visit an other object and still keep on monitoring his own object. Therefore, coupling 5 could be an analog line, a digital line, a DECT or GSM radio-coupling, or correspond with the same or a further so-called always-on IP-connection, whereby said same and said further so-called always-on IP-connection do not have said disadvantage of said lines and said radio-couplings. First memory 15 and/or second memory 18 in terminal 1 could be used to program a temporarily location of said monitor 3, and could be used to program said monitoring taking place only during the night and/or during selected hours. Said monitor generator 43 for generating said trigger signal could further be adapted to generate an alarm information signal in case of said threshold being exceeded, which alarm information signal is sent via first bus 50 and transceiver 40 and coupling 5 and switch 30 to an other terminal, for example via coupling 8, which other terminal either is of the type of the terminal 1 according to the invention, or is of an ordinary type, like an analog line-telephone, or a digital line-telephone, or a DECT telephone, or a GSM phone etc., for example to alert said owner who has left his own object to visit said other object, etc.

## Claims

1. Telecommunication system comprising a terminal (1) which comprises a transmitter (16) for in response to a trigger signal transmitting information to a monitor (3) via a network (2) and comprising said network (2) which is coupled to said terminal (1) via a communication coupling (4) and comprising a generator (14,33) for generating said trigger signal and comprising said monitor (3) which comprises a receiver (44) for receiving said information, **characterised in that** said generator (14,33) either forms part of said terminal (1) or forms part of said network (2), with said monitor (3) monitoring said communication coupling (4) by checking said information, with said communication coupling (4) corresponding with a so-called always-on IP-connection, and with said information being a first information signal comprising a first code, and with said network (2) comprising a switch (30) for switching said first information signal comprising said first code to a first destination corresponding with said monitor (3) and for switching a second information signal comprising a second code and originating via said communication coupling (4) from said terminal (1) to a second destination (7), with said first code being different from said second code and with said first destination corresponding with said monitor (3) being different from said second destination (7).

2. Telecommunication system according to claim 1, **characterised in that** said generator (14,33) is a network generator (33), with said terminal (1) comprising a receiver (13) for receiving said trigger signal.

3. Telecommunication system according to claim 2, **characterised in that** said trigger signal is also sent via said switch (30) and said coupling (5) to said receiver (44) in said monitor (3).

4. Telecommunication system according to claim 1, **characterised in that** said generator (14,33) is a terminal generator (14).

5. Telecommunication system according to any one of the preceding claims, **characterised in that** said first information comprising said first code further comprises origin information.

6. Telecommunication system according to any one of the preceding claims, **characterised in that** said first information comprising said first code further comprises a code defining a type of alarm.

7. Telecommunication system according to any one of the preceding claims, **characterised in that** said communication coupling (4) corresponding with a so-called always-on IP-connection is based upon Digital Subscriber Line technology or upon Integrated Service Digital Network technology or upon General Packet Radio Service technology, with said terminal (1) comprising a transceiver (12) which comprises a Digital Subscriber Line modem or an Integrated Service Digital Network modem or a General Packet Radio Service radio part.

8. Terminal (1) for use in a telecommunication system according to one of the claims 1 to 7, wherein the terminal (1) comprises a transmitter (16) for in response to a trigger signal transmitting information to a monitor (3) via a network (2) and the terminal (1) is coupled to the network (2) via a communication coupling (4), **characterised in that**, the terminal comprises a generator (14) forming part of said terminal (1) and generating said trigger signal and comprises a transceiver (12) coupled to said communication coupling (4) corresponding with a so-called always-on IP-connection, and the generator being arranged such that said information being a first information signal comprising a first code to be switched to a first destination corresponding with said monitor (3) for monitoring said communication coupling (4) by checking said information, and with a second information signal comprising a second code and originating from said terminal (1) to be switched to a second destination (7), with said first code being different from said second code and with said first destination corresponding with said monitor (3) being different from said second destination (7).

9. Network (2) for use in a telecommunication system according to one of the claims 1 to 7, wherein in response to a trigger signal information is transmitted to a monitor (3) via said network (2) by a transmitter (16) of a terminal (1) and the terminal (1) is coupled to said network (2) via a communication coupling (4), **characterised in that**, said network (2) comprises a generator (33) forming part of said network (2) and generating said trigger signal and comprises a switch (30) which is coupled to said communication coupling (4) corresponding with a so-called always-on IP-connection, and with said information being a first information signal comprising a first code, and with said switch (30) switching said first information signal comprising said first code to a first destination corresponding with said monitor (3) for monitoring said communication coupling (4) by checking said information and switching a second information signal comprising a second code and originating via said communication coupling (4) from said terminal (1) to a second destination (7), with said first code being different from said second code and with said first destination corresponding with said monitor (3) being different from said second destination (7).

10. Monitor (3) for use in a telecommunication system according to one of the claims 1 to 7, wherein in response to a trigger signal information is transmitted to said monitor (3) via said network (2) by a transmitter (16) of a terminal (1), which is coupled to said network (2) via a communication coupling (4), and said monitor (3) comprises a receiver (44) for receiving said information, **characterised in that** said monitor (3) comprises means for monitoring said communication coupling (4) by checking said information, with said communication coupling (4) corresponding with a so-called always-on IP-connection, and with said information being a first information signal comprising a first code to be switched to a first destination corresponding with said monitor (3), and with said receiver (44) further receiving said trigger signal, and with said monitor further comprising a processor (41) for checking a time-interval between an arrival of said first information signal and an arrival of said trigger signal, with said time-interval being smaller than a predefined threshold resulting in an ok-message and with said time-interval being larger than said predefined threshold resulting in an alarm-message.

11. Method for use in a telecommunication system comprising a terminal (1) which comprises a transmitter (16) for in response to a trigger signal transmitting information to a monitor (3) via a network (2) and comprising said network (2) which is coupled to said terminal (1) via a communication coupling (4) and comprising a generator (14,33) for generating said trigger signal and comprising said monitor (3) which comprises a receiver (44) for receiving said information, **characterised in that** said method comprises the steps of generating said trigger signal via said generator (14,33) either in said terminal (1) or in said network (2) and of monitoring said communication coupling (4) by checking said information via said monitor (3) and of switching said information being a first information signal comprising a first code via a switch (30) and arriving via said communication coupling (4) corresponding with a so-called always-on IP-connection to a first destination corresponding with said monitor (3) and of switching a second information signal comprising a second code and originating via said communication coupling (4) from said terminal (1) to a second destination (7), with said first code being different from said second code and with said first destination corresponding with said monitor (3) being different from said second destination (7).

## Patentansprüche

1. Ein Telekommunikationssystem, das ein Terminal (1) umfasst, das einen Sender (16) enthält, der als Reaktion auf ein Triggersignal Informationen über ein Netzwerk (2) zu einem Monitor (3) sendet, und das dieses Netzwerk (2) umfasst, das über eine Kommunikationsverbindung (4) mit dem Terminal (1) gekoppelt ist und einen Generator (14, 33) zur Erzeugung des Triggersignals enthält und das den Monitor (3) umfasst, der einen Empfänger (44) für den Empfang der Information enthält, **dadurch gekennzeichnet, dass** der Generator (14, 33) entweder einen Teil des Terminals (1) oder einen Teil des Netzwerks (2) bildet, wobei der Monitor (3) die Kommunikationsverbindung (4) überwacht, indem er die Information überprüft, wobei die Kommunikationsverbindung (4) einer so genannten immer eingeschalteten IP-Verbindung entspricht und wobei die Information ein erstes Informationssignal ist, das einen ersten Code umfasst, und wobei das Netzwerk (2) eine Vermittlungseinrichtung (30) enthält, die das erste Informationssignal, das den ersten Code enthält, an ein erstes Ziel vermittelt, das dem Monitor (3) entspricht, und die ein zweites Informationssignal, das einen zweiten Code enthält und über die Kommunikationsverbindung (4) von dem Terminal (1) kommt, an ein zweites Ziel (7) vermittelt, wobei sich der erste Code vom zweiten Code unterscheidet und wobei das erste Ziel dem Monitor (3) entspricht, der sich vom zweiten Ziel (7) unterscheidet.

2. Ein Telekommunikationssystem gemäß Anspruch 1, **dadurch gekennzeichnet, dass** der Generator (14, 33) ein Netzwerk-Generator (33) ist, wobei das Terminal (1) einen Empfänger (13) zum Empfang des Triggersignals enthält.

3. Ein Telekommunikationssystem gemäß Anspruch 2, **dadurch gekennzeichnet, dass** das Triggersignal auch über die Vermittlungseinrichtung (30) und die Verbindung (5) an den Empfänger (44) im Monitor (3) gesendet wird.

4. Ein Telekommunikationssystem gemäß Anspruch 1, **dadurch gekennzeichnet, dass** der Generator (14, 33) ein Terminal-Generator (14) ist.

5. Ein Telekommunikationssystem gemäß einem beliebigen der obigen Ansprüche, **dadurch gekennzeichnet, dass** die erste Information, die den ersten Code enthält, weiterhin Ursprungs-Information enthält.

6. Ein Telekommunikationssystem gemäß einem beliebigen der obigen Ansprüche, **dadurch gekennzeichnet, dass** die erste Information, die den ersten Code enthält, weiterhin einen Code enthält, der einen Typ von Alarm definiert.

7. Ein Telekommunikationssystem gemäß einem beliebigen der obigen Ansprüche, **dadurch gekennzeichnet, dass** die Kommunikationsverbindung (4), die einer so genannten immer eingeschalteten IP-Verbindung entspricht, auf der Technologie digitaler Teilnehmeranschlussleitungen (Digital Subscriber Line) oder auf der Technologie des diensteintegrierenden digitalen Netzes (Integrated Services Digital Network) oder auf der Technologie des allgemeinen Paketfunkdienstes (General Packet Radio Service) basiert, wobei das Terminal (1) einen Transceiver (12) enthält, der ein Digital Subscriber Line Modem oder ein Integrated Services Digital Network Modem oder einen General Packet Radio Service Funkteil enthält.

8. Ein Terminal (1) für die Verwendung in einem Telekommunikationssystem gemäß einem der Ansprüche 1 bis 7, wobei das Terminal (1) einen Sender (16) enthält, der als Reaktion auf ein Triggersignal Informationen über ein Netzwerk (2) zu einem Monitor (3) sendet, und das Terminal (1) über eine Kommunikationsverbindung (4) mit dem Netzwerk (2) gekoppelt ist, **dadurch gekennzeichnet, dass** das Terminal einen Generator (14) enthält, der einen Teil des Terminals (1) bildet und das Triggersignal erzeugt, und einen Transceiver (12) enthält, der mit der Kommunikationsverbindung (4) gekoppelt ist, die einer so genannten immer eingeschalteten IP-Verbindung entspricht und wobei der Generator so angeordnet ist, dass die Information ein erstes Informationssignal ist, das einen ersten Code umfasst, der an ein erstes Ziel zu vermitteln ist, das dem Monitor (3) entspricht, der die Kommunikationsverbindung (4) überwacht, indem er die Information überprüft, und mit einem zweiten Informationssignal, das einen zweiten Code enthält und von dem Terminal (1) kommt und an ein zweites Ziel (7) zu vermitteln ist, wobei sich der erste Code vom zweiten Code unterscheidet und wobei das erste Ziel dem Monitor (3) entspricht, der sich vom zweiten Ziel (7) unterscheidet.

9. Ein Netzwerk (2) für die Verwendung in einem Telekommunikationssystem gemäß einem der Ansprüche 1 bis 7, worin als Reaktion auf ein Triggersignal von einem Sender (16) eines Terminals (1) Informationen über das Netzwerk (2) zu einem Monitor (3) gesendet werden, und das Terminal (1) über eine Kommunikationsverbindung (4) mit dem Netzwerk (2) gekoppelt ist, **dadurch gekennzeichnet, dass** das Netzwerk (2) einen Generator (33) enthält, der einen Teil des Netzwerks (2) bildet und das Triggersignal erzeugt, und eine Vermittlungseinrichtung (30) enthält, die mit der Kommunikationsverbindung (4) gekoppelt ist, die einer so genannten immer eingeschalteten IP-Verbindung entspricht und wobei die Information ein erstes Informationssignal ist, das einen ersten Code enthält, und wobei mit der Vermittlungseinrichtung (30) das erste Informationssignal, das den ersten Code enthält, an ein erstes Ziel vermittelt wird, das dem Monitor (3) entspricht, der die Kommunikationsverbindung (4) überwacht, indem er die Information überprüft und wobei ein zweites Informationssignal, das einen zweiten Code enthält und über die Kommunikationsverbindung (4) von dem Terminal (1) kommt, an ein zweites Ziel (7) vermittelt wird, wobei sich der erste Code vom zweiten Code unterscheidet und wobei das erste Ziel dem Monitor (3) entspricht, der sich vom zweiten Ziel (7) unterscheidet.

10. Ein Monitor (3) für die Verwendung in einem Telekommunikationssystem gemäß einem der Ansprüche 1 bis 7, in dem als Reaktion auf ein Triggersignal Informationen über das Netzwerk (2) zu dem Monitor (3) durch einen Sender (16) eines Terminals (1) gesendet werden, das mit dem Netzwerk (2) über eine Kommunikationsverbindung (4) gekoppelt ist, und der Monitor (3) einen Empfänger (44) zum Empfang der Informationen enthält, **dadurch gekennzeichnet, dass** Monitor (3) Mittel zur Überwachung der Kommunikationsverbindung (4) enthält, indem er die Information überprüft, wobei die Kommunikationsverbindung (4) einer so genannten immer eingeschalteten IP-Verbindung entspricht und wobei die Information ein erstes Informationssignal ist, das einen ersten Code enthält, der an ein erstes Ziel zu vermitteln ist, das dem Monitor (3) entspricht, und wobei der Empfänger (44) weiterhin das Triggersignal empfängt, und wobei der Monitor weiterhin einen Prozessor (41) enthält, der ein Zeitintervall zwischen dem Eintreffen des ersten Informationssignals und dem Eintreffen des Triggersignals überprüft, wobei wenn das Zeitintervall kleiner ist als eine vordefinierte Schwelle eine OK-Nachricht erzeugt wird, und wenn das Zeitintervall größer als die vordefinierte Schwelle ist, eine Alarm-Nachricht erzeugt wird.

11. Ein Verfahren für die Verwendung in einem Telekommunikationssystem, das ein Terminal (1) umfasst, das einen Sender (16) enthält, um als Reaktion auf ein Triggersignal Informationen über ein Netzwerk (2) zu einem Monitor (3) zu senden, und das dieses Netzwerk (2) umfasst, das über eine Kommunikationsverbindung (4) mit dem Terminal (1) gekoppelt ist und einen Generator (14, 33) zur Erzeugung des Triggersignals enthält und das den Monitor (3) umfasst, der einen Empfänger (44) für den Empfang der Information enthält, **dadurch gekennzeichnet, dass** das Verfahren die Schritte der Erzeugung des Triggersignals mit dem Generator (14, 33) entweder in dem Terminal (1) oder im Netzwerk (2) und der Überwachung der Kommunikationsverbindung (4) umfasst, indem die Information mit dem Monitor (3) überprüft wird, und wobei die Information, die ein erstes Informationssignal ist, das einen ersten Code umfasst, und über die Kommunikationsverbindung (4) eintrifft, die einer so genannten immer eingeschalteten IP-Verbindung entspricht, über eine Vermittlungseinrichtung (30) an ein erstes Ziel vermittelt wird, das dem Monitor (3) entspricht, und wobei ein zweites Informationssignal, das einen zweiten Code enthält und über die Kommunikationsverbindung (4) von dem Terminal (1) kommt, an ein zweites Ziel (7) vermittelt wird, wobei sich der erste Code vom zweiten Code unterscheidet und wobei das erste Ziel dem Monitor (3) entspricht, der sich vom zweiten Ziel (7) unterscheidet.

## Revendications

1. Système de télécommunication comportant un terminal (1) qui comporte un émetteur (16) destiné, en réponse à un signal de déclenchement, à transmettre de l'information vers un moniteur (3) par l'intermédiaire d'un réseau (2) et comportant ledit réseau (2) qui est relié audit terminal (1) par l'intermédiaire d'un couplage de communication (4) et comportant un générateur (14, 33) destiné à générer ledit signal de déclenchement et comportant ledit moniteur (3) qui comporte un récepteur (44) destiné à recevoir ladite information, **caractérisé en ce que** ledit générateur (14, 33) forme une partie dudit terminal (1) ou forme une partie dudit réseau (2), avec ledit moniteur (3) qui contrôle ledit couplage de communication (4) en vérifiant ladite information, avec ledit couplage de communication (4) qui correspond à ce que l'on appelle une connexion IP permanente, et avec ladite information qui est un premier signal d'information comportant un premier code, et avec ledit réseau (2) qui comporte un commutateur (30) destiné à commuter ledit premier signal d'information comportant ledit premier code vers une première destination correspondant audit moniteur (3) et à commuter un deuxième signal d'information comportant un deuxième code et provenant, par l'intermédiaire dudit couplage de communication (4), dudit terminal (1) vers une deuxième destination, avec ledit premier code qui est différent dudit deuxième code et avec ladite première destination correspondant audit moniteur (3) qui est différente de ladite deuxième destination.

2. Système de télécommunication selon la revendication 1, **caractérisé en ce que** ledit générateur (14, 33) est un générateur de réseau (33), avec ledit terminal (1) qui comporte un récepteur (13) destiné à recevoir ledit signal de déclenchement.

3. Système de télécommunication selon la revendication 2, **caractérisé en ce que** ledit signal de déclenchement est également envoyé par l'intermédiaire dudit commutateur (30) et dudit couplage (5) vers ledit récepteur (44) dans ledit moniteur (3).

4. Système de télécommunication selon la revendication 1, **caractérisé en ce que** ledit générateur (14, 33) est un générateur de terminal (33).

5. Système de télécommunication selon l'une quelconque des revendications précédentes, **caractérisé en ce que** ladite première information comportant ledit premier code comporte en outre de l'information d'origine.

6. Système de télécommunication selon l'une quelconque des revendications précédentes, **caractérisé en ce que** ladite première information comportant ledit premier code comporte en outre un code définissant un type d'alarme.

7. Système de télécommunication selon l'une quelconque des revendications précédentes, **caractérisé en ce que** ledit couplage de communication (4) correspondant à ce que l'on appelle une connexion IP permanente est basé sur la technologie Digital Subscriber Line ou sur la technologie Integrated Service Digital Network ou sur la technologie General Packet Radio Service, avec ledit terminal (1) qui comporte un émetteur-récepteur (12) comportant un modem Digital Subscriber Line ou un modem Integrated Service Digital Network ou une partie radio General Packet Radio Service.

8. Terminal (1) pour utilisation dans un système de télécommunication selon l'une des revendications 1 à 7, ledit terminal (1) comportant un émetteur (16) destiné, en réponse à un signal de déclenchement, à transmettre de l'information vers un moniteur (3) par l'intermédiaire d'un réseau (2) et le terminal (1) étant relié au réseau (2) par l'intermédiaire d'un couplage de communication (4), **caractérisé en ce que** le terminal (1) comporte un générateur (14) formant une partie dudit terminal (1) et générant ledit signal de déclenchement et comporte un émetteur-récepteur (12) relié audit couplage de communication (4) correspondant à ce que l'on appelle une connexion IP permanente, et le générateur étant agencé de telle sorte que ladite information est un premier signal d'information comportant un premier code devant être commuté vers une première destination correspondant audit moniteur (3) destiné à contrôler ledit couplage de communication (4) en vérifiant ladite information, et avec un deuxième signal d'information comportant un deuxième code et provenant dudit terminal (1) devant être commuté vers une deuxième destination (7), avec ledit premier code qui est différent dudit deuxième code et avec ladite première destination correspondant audit moniteur (3) qui est différente de ladite deuxième destination (7).

9. Réseau (2) pour utilisation dans un système de télécommunication selon l'une des revendications 1 à 7, dans lequel, en réponse à un signal de déclenchement, de l'information est transmise vers un moniteur (3) par l'intermédiaire dudit réseau (2) par un émetteur (16) d'un terminal (1) et le terminal (1) est relié audit réseau (2) par l'intermédiaire d'un couplage de communication (4), **caractérisé en ce que** ledit réseau (2) comporte un générateur (33) formant une partie dudit réseau (2) et générant ledit signal de déclenchement et comporte un commutateur (30) qui est relié audit couplage de communication (4) correspondant à ce que l'on appelle une connexion IP permanente, et avec ladite information qui est un premier signal d'information comportant un premier code, et avec ledit commutateur (30) qui commute ledit premier signal d'information comportant ledit premier code vers une première destination correspondant audit moniteur (3) destiné à contrôler ledit couplage de communication (4) en vérifiant ladite information et qui commute un deuxième signal d'information comportant un deuxième code et provenant par l'intermédiaire dudit couplage de communication (4) dudit terminal (1) vers une deuxième destination (7), avec ledit premier code qui est différent dudit deuxième code et avec ladite première destination correspondant audit moniteur (3) qui est différente de ladite deuxième destination (7).

10. Moniteur (3) pour utilisation dans un système de télécommunication selon l'une des revendications 1 à 7, dans lequel, en réponse à un signal de déclenchement, de l'information est transmise vers ledit moniteur (3) par l'intermédiaire dudit réseau (2) par un émetteur (16) d'un terminal (1), qui est relié audit réseau (2) par l'intermédiaire d'un couplage de communication (4), et ledit moniteur (3) comporte un récepteur (44) destiné à recevoir ladite information, **caractérisé en ce que** ledit moniteur (3) comprend des moyens destinés à contrôler ledit couplage de communication (4) en vérifiant ladite information, avec ledit couplage de communication (4) qui correspond à ce que l'on appelle une connexion IP permanente, et avec ladite information qui est un premier signal d'information comportant un premier code devant être commuté vers une première destination correspondant audit moniteur (3), et avec ledit récepteur (44) qui reçoit en outre ledit signal de déclenchement, et avec ledit moniteur (3) qui comporte en outre un processeur (41) destiné à vérifier un intervalle de temps entre une arrivée dudit premier signal d'information et une arrivée dudit signal de déclenchement, avec ledit intervalle de temps qui est plus petit qu'un seuil prédéfini ayant pour résultat un message correct et avec ledit intervalle de temps qui est plus grand que ledit seuil prédéfini ayant pour résultat un message d'alarme.

11. Procédé pour utilisation dans un système de télécommunication comportant un terminal (1) qui comporte un émetteur (16) destiné, en réponse à un signal de déclenchement, à transmettre de l'information vers un moniteur (3) par l'intermédiaire d'un réseau (2) et comportant ledit réseau (2) qui est relié audit terminal (1) par l'intermédiaire d'un couplage de communication (4) et comportant un générateur (14, 33) destiné à générer ledit signal de déclenchement et comportant ledit moniteur (3) qui comporte un récepteur (44) destiné à recevoir ladite information, **caractérisé en ce que** ledit procédé comporte les étapes consistant à générer ledit signal de déclenchement par l'intermédiaire dudit générateur (14, 33) dans ledit terminal (1) ou dans ledit réseau (2) et à contrôler ledit couplage de communication (4) en vérifiant ladite information par l'intermédiaire dudit moniteur (3) et à commuter ladite information qui est un premier signal d'information comportant un premier code par l'intermédiaire d'un commutateur (30) et arrivant par l'intermédiaire dudit couplage de communication (4) correspondant à ce que l'on appelle une connexion IP permanente vers une première destination correspondant audit moniteur (3) et à commuter un deuxième signal d'information comportant un deuxième code et provenant par l'intermédiaire dudit couplage de communication (4) dudit terminal (1) vers une deuxième destination (7), avec ledit premier code qui est différent dudit deuxième code et avec ladite première destination correspondant audit moniteur (3) qui est différente de ladite deuxième destination (7).
